# EUROPÄISCHE PATENTANMELDUNG

(11) **EP 4 099 163 A1**
(43) Veröffentlichungstag der Anmeldung: **07.12.2022**
(21) Anmeldenummer: 21176978.1
(22) Anmeldetag: 31.05.2021
(51) Int. Cl.: G06F 9/455, G06F 21/56, G06F 8/61, G06F 8/71

(54) **VERFAHREN UND SYSTEM ZUM ERKENNEN UND BESEITIGEN VON SCHWACHSTELLEN IN EINZELNEN DATEISYSTEMSCHICHTEN EINES CONTAINER-IMAGES**

(71) Anmelder: Siemens Aktiengesellschaft, 80333 München (DE)
(72) Erfinder: Knierim, Christian, 81373 München (DE)

(57) **Zusammenfassung**

Verfahren zum automatischen Erkennen und Beseitigen von Schwachstellen in einzelnen Dateisystemschichten eines Container-Images (20), in dem jede Dateisystemschicht (L1,..., Ln) eine eindeutige Schichtkennung (ID1,..., IDn)) enthält, mit den Schritten:
a) Überprüfen (S1) der Dateisystemschichten (L1,..,Ln) des Container-Images (20) auf Schwachstellen,
b) Identifizieren (S2) von mindestens einer Schwachstelle in einer ersten Dateisystemschicht (Li) des Container-Images,
c) für jede erste Dateisystemschicht (Li), Übermitteln (S3) der Schichtkennung (IDi) und einer Schwachstellenfreien neuen ersten Dateisystemschicht (nLi) an eine Zusammenbauvorrichtung (34),
d) Eintragen (S4) der Schichtkennung (IDi) der ersten Dateisystemschicht (Li) unverändert in die neue erste Dateisystemschicht (nLi),
e) Zuordnen (S5) einer Integritätskennung (INTi), die abhängig von der neuen ersten Dateisystemschicht (nLi) und der Schichtkennung (IDi) erzeugt wird, als Metadatum zur neuen ersten Dateisystemschicht (nLi),
und
f) Ersetzen (S6) lediglich der durch die Schichtkennung (IDi) gekennzeichneten ersten Dateisystemschicht (Li) durch die neue erste Dateisystemschicht (nLi) im Container-Image durch die Zusammenbauvorrichtung (34).

## Beschreibung

Die Erfindung betrifft ein Verfahren zum automatischen Erkennen und Beseitigen von Schwachstellen in einzelnen Dateisystemschichten eines Container-Images, in dem jede Dateisystemschicht eine eindeutige Schichtkennung enthält.

Containervirtualisierung ist eine Methode, bei der mehrere Instanzen eines Betriebssystems isoliert voneinander einen Kernel eines Gastrechners nutzen können. Software Container, im Weiteren kurz Container genannt, stellen somit eine leichtgewichtige Art der Virtualisierung einer Laufzeitumgebung auf einem Gastrechner, auch Hostsystem genannt, dar und kapseln eine in einer Container-Instanz betriebene Software-Applikation vom darunterliegenden Hostsystem ab.

Software Applikationen, im Weiteren kurz Applikation genannt, werden mittlerweile in vielen Bereichen wie beispielsweise der Industrieautomation und der Prozesssteuerung, aber auch für Anwendungen in Transportsystemen oder Fahrzeugen mittels Container implementiert.

Um eine Container-Instanz auf dem Hostsystem starten zu können, wird ein Container-Image benötigt, welches neben der Applikation auch die für die Applikation erforderlichen Binärprogramme und Bibliotheken enthält. Oftmals wird zur Bereitstellung der erforderlichen Binärprogramme und Bibliotheken ein so genanntes Basis-Image verwendet, welches einen Paketmanager enthält mit dessen Hilfe weitere Komponenten innerhalb des Container-Images installiert werden können.

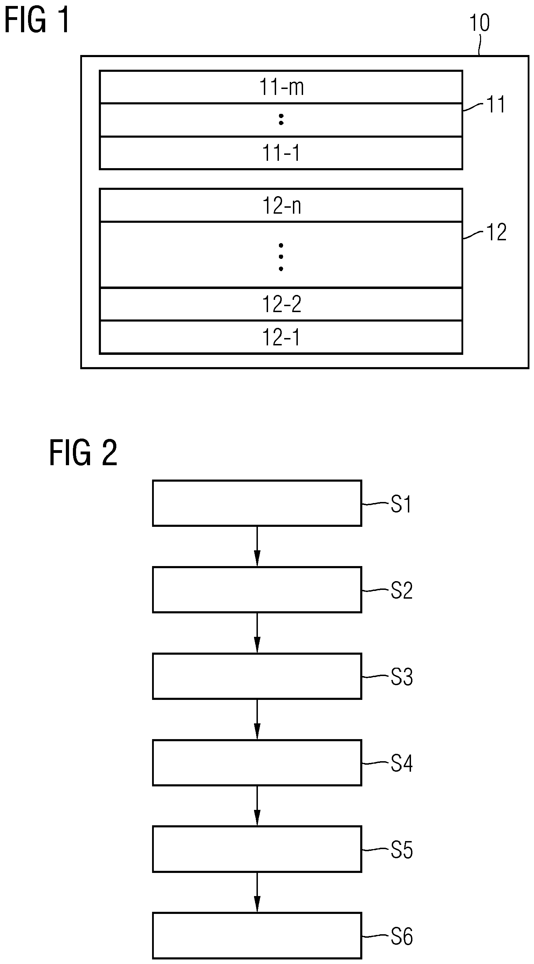

Fig. 1 zeigt eine typische Struktur eines Container-Images 10. Das Container-Image 10 enthält ein Basis-Image 12 und eine Container-Schicht 11. Das Basis-Image 12 umfasst eine oder mehrere Basisschichten 12-1,.., 12-n die Dateisystemschichten bilden. D.h. die Basisschichten 12-1,.., 12-n sind aufeinander gestapelt und bilden ein Wurzel (root)-Dateisystem des Container-Images 10. Alle Schichten der Container-Schicht 11 und alle Basisschichten 12-1,.., 12-n des Basis-Images 12 werden zusammen als Container-Image bezeichnet. Nachfolgend werden Basisschichten 12-1,.., 12-n oder Container-schichten 11-1,.., 11-m allgemein als Schichten bezeichnet.

Das Container-Image 10 wird mit Hilfe einer Konfigurationsdatei erstellt. Bei der bekannten Container-Laufzeitumgebung "Docker" wird die Konfigurationsdate als Dockerfile bezeichnet. Konfigurationsdatei enthält feststehende Direktiven, mit denen definiert wird, welche Operationen auf dem Container-Image 10 angewandt werden sollen. Typischerweise wird als erstes das Basis-Image 12 referenziert, welches beispielsweise aus einem zentralen Repository bezogen wird. Alternativ sind auch rootless Container-Images möglich, bei denen die relevanten Binärdateien vom Ersteller des Images selbst zur Verfügung gestellt werden.

Ein Übersetzungsprogramm interpretiert die Konfigurationsdatei und wendet die hinterlegten Direktiven auf das Container-Image an. Dieser Vorgang wird als Zusammenbau- oder Build-Prozess bezeichnet. Hiermit wird das Container-Image in einem Format erstellt, mit dessen Hilfe man das Root-Dateisystem einer Container-Instanz mit Hilfe eines Overlay-Dateisystems bereitstellen kann. Das Basis-Image kann bereits aus mehreren Schichten, siehe Basisschichten 12-1,.., 12-n in Fig.1, bestehen, welche zu einem Dateisystem übereinandergelegt werden. Zusätzlich erzeugen die meisten Zeile in der Konfigurationsdatei, welche eine Änderungsoperation auf dem Dateisystem auslöst, eine weitere Schicht.

Zur Verdeutlichung sei folgendes Beispiel für die Erstellung eines Container-Images beschrieben:
- Ein Basis-Image besteht bereits aus drei Schichten. Diese werden mit Hilfe der Direktive FROM <Basis-Image>:Tag angezogen und übereinander gelegt.
- In der zweiten Zeile wird die Installation von drei Paketen (mitsamt Abhängigkeiten erzeugt) und somit eine weitere Schicht erzeugt und über das Basis-Image gelegt.
- In der dritten Zeile wird der Runtime User gewählt. Dies erzeugt keine weitere Schicht.
- In der vierten Zeile wird Software übersetzt und in das Dateisystem geschrieben. Somit wird eine weitere Dateisystemschicht erzeugt.
- In der letzten Zeile wird der Init-Prozess definiert. Es wird keine neue Schicht erzeugt.

Jede einzelne Dateisystemschicht wird durch eine Schichtkennung identifiziert, die als Checksumme mittels einer Hashfunktion über die jeweilige Schicht gebildet wird. Das fertig zusammengebaute Container-Image oder auch eine oder mehrere der einzelnen Basis- und/oder Container-Schichten 12-1,.., 12-n, 11-1,..,11-m werden in einem Repositorium, auch Registry genannt, publiziert und sind somit für die Laufzeitumgebung des Hostsystems erreichbar.

Es werden auch öffentlich verfügbare Container-Images beliebiger Komplexität bereitgestellt. Ein solches Container-Image kann erweitert werden, indem z.B. zusätzliche Komponenten aus einem zugehörigen Paketmanager installiert werden oder während des Erstellens, d.h. Zusammenbauens des Container-Images Übersetzungsvorgänge durchgeführt werden. Die übersetzten Binärprogramme werden innerhalb des Dateisystems ebenfalls bereitgestellt.

In jeder einzelnen Dateisystemschicht sind Dateien enthalten, die Schwachstellen enthalten können. Es gibt keinen bekannten automatisierten Prozess, der es erlaubt die in einer Schicht vorhandenen Schwachstellen automatisch zu beseitigen. Stattdessen werden in einer Container-Instanz heute Schwachstellen beseitigt, indem der komplette Build-Prozess durchlaufen wird und ein neues Container-Image mit einer neuen Version erstellt wird.

Bekannt ist, Schwachstellen im Basis-Image entweder zu aktualisieren, indem die Version des Basis-Images angehoben wird oder eine Aktualisierung über den Paketmanager bei jedem Build-Prozess anzufordern.

Im Rahmen des heute bekannten Docker Build-Prozesses ist es möglich, dass einzelne Schichten des Dateisystems händisch gelöscht werden, sofern diese nicht von anderen Images referenziert werden. Da sich hierbei Referenzen ändern, werden durch Löschen einer Schicht alle nachfolgenden Schichten im Rahmen des Build-Prozesses neu erstellt.

Es ist somit eine Aufgabe der vorliegenden Erfindung, die in einer Schicht des Container-Images vorhandenen Schwachstellen automatisiert erkennen und beseitigen zu können, sowie in einer Laufzeitumgebung überprüfen zu können, ob einzelne Schichten des Container-Images Schadstellen enthalten und diese Schichten zu aktualisieren.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zum automatischen Erkennen und Beseitigen von Schwachstellen in einzelnen Dateisystemschichten eines Container-Images, in dem jede Dateisystemschicht eine eindeutige Schichtkennung enthält, mit den Schritten:
a) Überprüfen der Dateisystemschichten des Container-Images auf Schwachstellen,
b) Identifizieren von mindestens einer Schwachstelle in einer ersten Dateisystemschicht des Container-Images,
c) für jede erste Dateisystemschicht, Übermitteln der Schichtkennung und einer Schwachstellenfreien neuen ersten Dateisystemschicht an eine Zusammenbauvorrichtung, und
d) Eintragen der Schichtkennung der ersten Dateisystemschicht unverändert in eine neue erste Dateisystemschicht,
e) Zuordnen einer Integritätskennung, die abhängig von der neuen ersten Dateisystemschicht und der Schichtkennung erzeugt wird, als Metadatum zur neuen ersten Dateisystemschicht,
f) Ersetzen lediglich der durch die Schichtkennung gekennzeichneten ersten Dateisystemschicht durch die neue erste Dateisystemschicht im Container-Image durch die Zusammenbauvorrichtung.

Ist die Aktualisierung abgeschlossen, bleibt die Schichtkennung der Overlay-Dateisystemschicht im Gegensatz zu den bekannten Verfahren gleich. Damit muss bei einer erkannten Schwachstelle nicht das komplette Container-Image erneut zusammengebaut werden, sondern lediglich die identifizierten ersten Schichten, also diejenigen Schichten, die Schwachstellen haben, ersetzt werden. Da die Schichtkennung der Dateisystemschicht durch eine Hashfunktion über ersten Dateisystemschicht, genauer über die Binärdaten der ersten Dateisystemschicht, abgeleitet wird, dient die Schichtkennung auch zur Überprüfung der Integrität. Um diesen Integritätsschutz weiterhin bereitstellen zu können, wird eine Integritätskennung, beispielsweise ein Hashwert, über die aktualisierten Binärdaten der neuen ersten Dateisystemschicht und die gleichbleibende Schichtkennung in den Metadaten der Dateisystemschicht hinterlegt.

In einer vorteilhaften Ausführungsform weist das Verfahren den zusätzlichen Schritt auf mindestens eine zweite Dateisystemschicht des Container-Images zu identifizieren, die mindestens eine Komponente der ersten Dateisystemschicht enthält, und Durchführen der Schritte c) bis f) für jede zweite Dateisystemschicht.

Somit werden auch diejenigen Schichten, die von der mit Schwachstelle behafteten, ersten Schicht abhängig sind erkannt und ersetzt. Da insbesondere Dateien, bspw. Binärprogramme, aus einer der Basis-Schichten häufig in mehreren Dateisystemschichten referenziert und verwendet werden, befindet sich die identifizierten Schwachstellen dieser BasisSchicht auch in den mehreren Dateisystemschichten. Diese mehreren Dateisystemschichten sind somit zweite Dateisystemschichten. Eine zweite Dateisystemschicht ist abhängig von der ersten Dateisystemschicht in dem Sinn sind, dass sie Daten, die in der erste Dateisystemschicht mit Schwachstellen bereitgestellt werden, überschreiben. Es muss hierbei nicht zwangsläufig eine Schwachstelle sein, sondern kann auch die Paketdatenbank oder eine Konfigurationsdatei sein, die in der nachfolgenden Dateisystemschicht überschrieben wird.

In einer vorteilhaften Ausführungsform wird eine Versionskennung der ersten Dateisystemschicht und/oder eine Versionskennung der zweiten Dateisystemschicht bei jedem Ersetzen der ersten Dateisystemschicht und/oder zweiten Dateisystemschicht geändert und die geänderte Versionskennung wird in den Metadaten angeordnet.

Über die Versionskennung in den Metadaten des Container-Images bzw. der ersten oder zweiten Dateisystemschichten kann die Laufzeitumgebung eines Gastrechners, die eine Container-Instanz basierend auf dem Container-Image betreibt, erkennen, ob es eine aktualisierte Variante zu einer Dateisystemschicht des Container-Images gibt. Ist dies der Fall können sowohl die erste Dateisystemsicht und soweit vorhanden die zweiten Dateisystemsichten durch die neue erste und/oder neue zweite Dateisystemsichten ersetzt werden.

In einer vorteilhaften Ausführungsform wird die Versionskennung der ersten und/oder zweiten Dateisystemschicht lediglich dann geändert, wenn eine Binärdarstellung der neuen ersten und/oder neuen zweiten Dateisystemschicht von einer Binärdarstellung der ersten und/oder zweiten Dateisystemschicht abweicht.

Dadurch werden die Versionskennungen lediglich von solchen erste und zweite Dateisystemschichten geändert, die sich in ihrer Binärdarstellung gegenüber der neuen ersten und zweiten Dateisystemschicht geändert hat. Um eine oder mehrere zweite Dateisystemschichten, die von der ersten Dateisystemschicht abhängig sind, zu identifizieren wird eine Deltaerkennung durchgeführt. Dabei wird anhand der Binärdarstellung der ersten Dateisystemschicht eine darin geänderte Datei identifiziert und in den über der ersten Dateisystemschicht befindlichen Dateisystemschichten überprüft, ob die geänderte Datei enthalten ist. Ist dies der Fall, handelt es sich bei der Dateisystemschicht um eine zweite Dateisystemschicht, die ersetzt werden muss. In dieser Weise werden alle über der ersten Dateisystemschicht liegende Dateisystemschichten nach einer Abhängigkeit von der ersten Dateisystemschicht überprüft und alle von der ersten Dateisystemschicht abhängigen zweiten Dateisystemschichten identifiziert. Für jede dieser zweiten Dateisystemschichten wird wiederum jede darüberliegende Dateisystemschicht daraufhin geprüft, ob diese Schicht die zweite Dateisystemschicht referenziert bzw. darin geänderte Dateien enthält. Somit wird sukzessive jede Dateisystemschicht nach einer Abhängigkeit von den darunterliegenden Schichten geprüft. Die jeweils abhängige Dateisystemschicht wird durch eine neue Dateisystemschicht ersetzt.

Letztendlich wird jedoch nur bei solchen neuen ersten und neuen zweiten Dateisystemschichten die Versionskennung geändert, die sich in ihrer Binärdarstellung von der ersten bzw. zweiten Dateisystemschicht unterscheiden.

In einer vorteilhaften Ausführungsform werden die Schichtkennungen der ersten und/oder zweiten Dateisystemschicht und Information zur Schwachstellenfreien neuen ersten und/oder neuen zweiten Dateisystemschicht für das Container-Image an eine Schwachstellendatenbank übermittelt und von der Schwachstellendatenbank der Zusammenbauvorrichtung bereitgestellt werden.

Die Information zur Schwachstellenfreien neue ersten bzw. zweiten Dateisystemschicht kann die gesamte Schwachstellenfreie neue erste bzw. zweite Dateisystemschicht sein oder ein Verweis auf deren Speicherort sein. Die Information kann aber auch weitere Metadaten sein. Optional wird auch die identifizierte Schwachstelle in Schwachstellendatenbank gespeichert. Somit kann eine Zusammenbauvorrichtung auf dem Gastrechner oder einer Zusammenbauvorrichtung bei der Erstellung des Container-Images bekannte Schwachstellen zentral abfragen und die aktualisierten neuen Dateisystemschichten von dort abrufen.

In einer vorteilhaften Ausführungsform fordert die Zusammenbauvorrichtung die Schichtkennung und Information zur Schwachstellenfreien neuen ersten und/oder neuen zweiten Dateisystemschicht für das Container-Image entsprechend einer vorgegebenen Richtline bei der Schwachstellendatenbank an.

Über die Richtline ist auf der Zusammenbauvorrichtung hinterlegt, ob diese die jeweiligen neuen ersten bzw. zweiten Dateisystemschichten von der Schwachstellendatenbank oder ein herunterladen möchten und selbst einen Build-Prozess aufgrund des geänderten Basis-Images gemäß dem spezifizierten Verfahren startet. Des Weiteren kann die Richtlinie zeitlich Vorgaben zum Startzeitpunkt oder Überprüfungszyklus enthalten. Die Laufzeitumgebung des Gastrechners führt keinen Build-Prozess durch, sondern startet und stoppt lediglich auf der Laufzeitumgebung ausgeführte Container-Instanzen und holt sich die Container-Images von einem Container-Repositorium. In der Richtlinie ist in diesem Fall spezifiziert, wie oft der Gastrechner die Dateisystemschichten abruft und wann die Laufzeitumgebung des Gastrechners einen Neustart der Computerinstanz durchführt.

In einer vorteilhaften Ausführungsform wird nach dem Ersetzen der ersten Dateisystemschicht und/oder zweiten Dateisystemschicht im Container-Image die Schichtkennung in der Schwachstellendatenbank von der Zusammenbauvorrichtung als erledigt markiert und/oder gelöscht.

Somit kann eine mehrfache Aktualisierung verhindert werden. Insbesondere bei einer zentralen Schwachstellendatenbank, die die Information für viele Gastrechner und Zusammenbauvorrichtungen bereitstellt, wird lediglich markiert. Liegt eine Richtlinie vor, die eine erneute Überprüfung der Schichten vorgibt, so kann die Schichtkennung gelöscht werden.

In einer vorteilhaften Ausführungsform wird beim Identifizieren einer Schwachstelle in einer ersten Dateisystemschicht ein Alarmsignal an die Zusammenbauvorrichtung übermittelt wird.

Somit kann die Zusammenbauvorrichtung selbst die Aktualisierung des Container-Images starten bzw. den Startzeitpunkt wählen.

In einer vorteilhaften Ausführungsform sind alle Direktiven in einer Konfigurationsdatei des Container-Images, die auf die ersten Dateisystemschicht ausgeführt werden, markiert und die mindestens eine zweite Dateisystemschicht wird anhand der Markierung identifiziert.

Dies ermöglicht es, einzelne Schichten bei der Veränderung von tieferliegenden Schichten immer neu zu generieren. In einer vorteilhaften Ausführungsform werden die Schritte c) bis f) für alle zweiten Dateisystemschichten durchgeführt, wenn sich die erste Dateisystemschicht ändert.

In einer alternativen vorteilhaften Ausführungsform werden die Schritte c) bis f) nur dann durchgeführt werden, wenn sich die von der ersten Dateisystemschicht abhängige zweite Dateisystemschicht (Lj) ändert.

In einer vorteilhaften Ausführungsform wird die mindestens eine neue erste Dateisystemschicht und/oder neue zweite Dateisystemschicht in einem Container-Repositorium abgespeichert und veröffentlicht.

Somit können die aktualisierten Dateisystemschichten zentral gespeichert und von verschiedenen Zusammenbauvorrichtungen bzw. Gastrechnern abgerufen werden.

In einer vorteilhaften Ausführungsform werden die mindestens eine neue erste Dateisystemschicht und/oder neue zweite Dateisystemschicht auf dem Container-Repositorium von einer Laufzeitumgebung eines Gastrechners oder eine beliebige Zusammenbauvorrichtung abhängig von einer Aktualisierungsrichtlinie abgefragt und in einem Container-Image auf dem Gastrechner ersetzt.

Ein zweiter Aspekt der Erfindung betrifft ein System zum automatischen Erkennen und Beseitigen von Schwachstellen in einzelnen Dateisystemschichten eines Container-Images, in dem jede Dateisystemschicht eine eindeutige Schichtkennung enthält, umfassend:
eine Schwachstellenscanner, die derart ausgebildet ist,
   a) die Dateisystemschichten des Container-Images auf Schwachstellen zu überprüfen,
   b) mindestens eine Schwachstelle in einer ersten Dateisystemschicht des Container-Images zu identifizieren,
   c) für jede erste Dateisystemschicht, die Schichtkennung und eine Schwachstellenfreie neue erste Dateisystemschicht an eine Zusammenbauvorrichtung zu übermitteln, und
die Zusammenbauvorrichtung derart ausgebildet ist,
   d) die Schichtkennung einer ersten Dateisystemschicht unverändert in die neue erste Dateisystemschicht einzutragen,
   e) eine Aktualisierungskennung, die abhängig von der neuen ersten Dateisystemschicht und der Schichtkennung erzeugt wird, als Metadatum zur neuen ersten Dateisystemschicht zuzuordnen, und
die Zusammenbauvorrichtung derart ausgebildet ist, f) lediglich die durch die Schichtkennung gekennzeichneten ersten Dateisystemschicht durch die neue erste Dateisystemschicht in der Zusammenbauvorrichtung zu ersetzen.

In einer vorteilhaften Ausführungsform ist die Zusammenbauvorrichtung innerhalb einer Zusammenbauanordnung oder in einem Gastrechner, auf dem das Container-Image ausgeführt wird, ausgebildet ist.

Ein dritter Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die dazu geeignet sind, die Schritte des Verfahrens durchzuführen.

Sofern es in der nachfolgenden Beschreibung nicht anders angegeben ist, beziehen sich die Begriffe "überprüfen", "identifizieren", "eintragen" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliege können, beispielsweise als elektrische Impulse. Das System und darin insbesondere die physikalische als auch die virtuelle Realisierung ausgebildeten Gastrechner, Zusammenbauvorrichtung und weitere kann einen oder mehrere Prozessoren umfassen.

Ein Computerprogrammprodukt, wie z. B. ein Computerprogrammmittel, kann beispielsweise als Speichermedium, wie z. B. Speicherkarte, USB-Stick, CD-ROM, DVD oder auch in Form einer herunterladbaren Datei von einem Server in einem Netzwerk bereitgestellt oder geliefert werden. Dies kann z. B. in einem drahtlosen Kommunikationsnetzwerk durch die Übertragung einer entsprechenden Datei auf das Computerprogrammprodukt oder dem Computerprogrammmittel erfolgen.

Ausführungsbeispiele des erfindungsgemäßen Verfahrens und des erfindungsgemäßen Systems sind in den Zeichnungen beispielhaft dargestellt und werden anhand der nachfolgenden Beschreibung näher erläutert. Es zeigen:
- Fig. 1: ein Container-Image entsprechend dem Stand der Technik in schematischer Darstellung;
- Fig. 2: ein Ausführungsbeispiel des erfindungsgemäßen Verfahrens in Form eines Ablaufdiagramms;
- Fig. 3: ein Ausführungsbeispiel eines Container-Images mit Dateisystemschichten einer Anwendung des erfindungsgemäßen Verfahrens in schematischer Darstellung;
- Fig. 4: ein Ausführungsbeispiel des Container-Images mit einer beseitigten Schwachstelle einer ersten Dateisystemschicht durch Anwendung des erfindungsgemäßen Verfahrens in schematischer Darstellung;
- Fig. 5: ein Ausführungsbeispiel des Container-Images mit einer beseitigten Schwachstelle einer zweiten Dateisystemschicht durch Anwendung des erfindungsgemäßen Verfahrens in schematischer Darstellung;
- Fig. 6: ein Ausführungsbeispiel eines Metadatums für eine erfindungsgemäße Dateisystemschicht in schematischer Darstellung; und
- Fig. 7: ein Ausführungsbeispiel eines erfindungsgemäßen Systems in Blockdarstellung

Einander entsprechende Teile sind in allen Figuren mit den gleichen Bezugszeichen versehen.

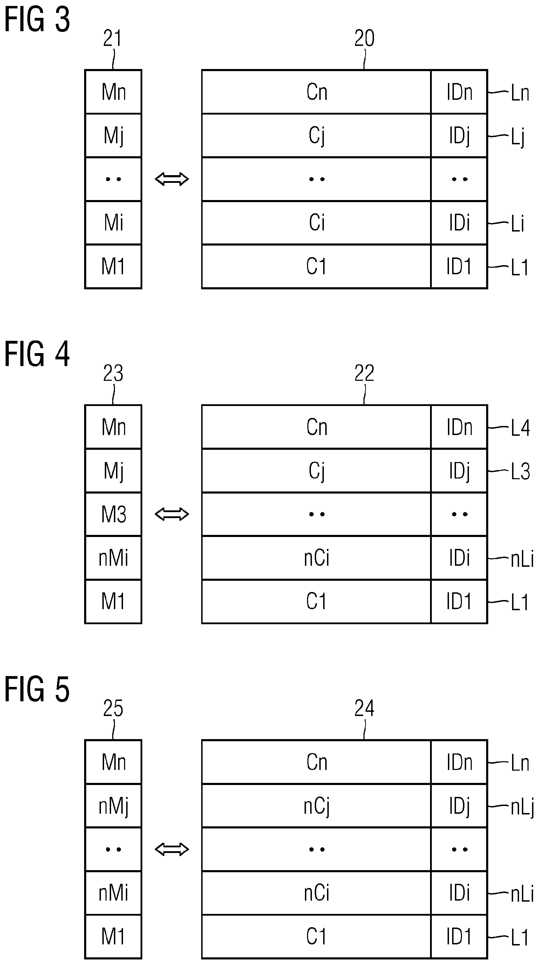

Das erfindungsgemäße Verfahren wird nun anhand von Figur 2 in Verbindung mit den Figuren 3-5 beschrieben.

Es wird davon ausgegangen, dass ein Container-Image, beispielsweise ein in Figur 3 schematisch dargestelltes Container-Image 20 vorliegt. Das Container-Image 20 kann beispielsweise eine Software Anwendung sein, die durch eine Laufzeitumgebung auf einem Hostsystem, im weiteren als Gastrechner bezeichnet, in einem Automatisierungsnetzwerk, einem Verteilernetzwerk, einem Gebäudenetzwerk oder Fahrzeugnetzwerk ausgeführt wird. Das Container-Image 20 umfasst Dateisystemschichten L1,.., Ln. Jede Dateisystemschichten L1,.., Ln umfasst einen Schichtinhalt C1,.., Cn und eine Schichtkennung ID1,.., IDn, die die Schicht eindeutig kennzeichnet und insbesondere eine Prüfsumme gebildet über den Containerinhalt ist. Ändert sich der Schichtinhalt einer Dateisystemschicht wir üblicherweise eine neue Schichtkennung gebildet über den geänderten Schichtinhalt ermittelt und in die Schicht einkodiert. Dem Container-Image sind Metadaten 21 zugeordnet, die Schichtbezogene Metadaten M1,.., Mn zu den einzelnen Dateisystemschichten L1,.., Ln enthalten.

Um eine Schwachstelle in einzelnen Dateisystemschichten automatisch zu erkennen und zu beseitigen werden in einem ersten Verfahrensschritt S1 die Dateisystemschichten L1,.., Ln auf Schwachstellen überprüft. Schwachstellen in einer Datei beispielsweise einem Software-Programm, liegen dann vor, wenn Kodierungsregeln missachtet sind oder Schadprogramme im Software-Code enthalten sind. Schwachstellen werden mit Hilfe eines Schwachstellenscanners erkannt werden. Dieser arbeitet üblicherweise signaturbasiert oder verwendet einen oder mehrere vom Basis-Image verwendete Paketmanager, um zu ermitteln, welche Komponenten in den einzelnen Dateisystemschichten des Container-Image installiert sind. Komponenten können beispielsweise Dateien bspw. Binärdateien oder Anwendungsdateien sein. Bei der signaturbasierten Variante können die einzelnen Dateisystemschichten isoliert betrachtet werden und müssen zur Erkennung von Schwachstellen nicht notwendigerweise zu einem Overlay-Verzeichnis zusammengefasst und eingehängt werden.

Werden ein oder mehrere Schwachstellen in einer Schicht identifiziert, siehe Schritt S2, so wird für jede erste Dateisystemschicht die Schichtkennung IDi und eine neue erste Dateisystemschicht an eine Zusammenbauvorrichtung übermittelt, siehe Schritt S3. Die Schichtkennung IDi der ersten Dateisystemschicht Li und Information zur Schwachstellenfreien neuen ersten Dateisystemschicht nLi für das Container-Image 22 können optional an eine Schwachstellendatenbank übermittelt und von der Schwachstellendatenbank an die Zusammenbauvorrichtung bereitgestellt werden.

In Schritt S4 wird die Schichtkennung der identifizierten ersten Schicht unverändert in eine Schwachstellenfreie Version der ersten Schicht eingetragen. Die Schwachstellenfreie Version der ersten Schicht wird beispielsweise neu erzeugt. Existiert bereits eine schwachstellenfreie Version der schadhaften Schicht so wird diese als neue erste Dateisystemschicht verwendet. Schwachstellenfreie neue Dateisystemschichten sind beispielsweise in einer Schwachstellendatenbank oder in einem Container-Repositorium gespeichert und können von dort abgerufen werden. Die Schichtkennung der neue erste Dateisystemschicht ist somit identisch mit der Schichtkennung der Schwachstellenbehafteten ersten Dateisystemschicht, obwohl sich der Inhalt der neuen ersten Dateisystemschicht vom Inhalt der ersten Dateisystemschicht unterscheidet. Da in den über der ersten Dateisystemschicht liegenden Dateisystemschichten die Schichtkennung der ersten Dateisystemschicht zumindest teilweise referenziert wird, müssen diese Dateisystemschichten nicht angepasst werden.

In Schritt 5 wird eine Integritätskennung abhängig von der neuen ersten Dateisystemschicht und der Schichtkennung erzeugt, und als Metadatum der neuen ersten Dateisystemschicht zugeordnet. Die Integritätskennung wird in gleicher Weise wie die ursprüngliche Schichtkennung als Prüfsumme über den Inhalt der neuen ersten Dateisystemschicht gebildet. Somit kann anhand der Integritätskennung geprüft werden, ob der Inhalt der neue erste Dateisystemschicht unverändert vorliegt. Anschließend wird lediglich die durch die Schichtkennung gekennzeichnete erste Dateisystemschicht durch die neue erste Dateisystemschicht im Container-Image ersetzt.

Das in Figur 4 dargestellte Container-Image 22 zeigt das Container-Image 20 nach dem Austausch der als schadhaft identifizierten Dateisystemschicht Li durch eine neue erste Dateisystemschicht nLi. Diese enthält die Schwachstellenfreie neue erste Dateisystemschicht als neuen Schichtinhalt nCi sowie die unveränderte Schichtkennung IDi der ersten Dateisystemschicht Li des Container-Images 20. Die dem Container-Image 22 zugeordneten Metadaten 23 enthalten für die Dateisystemschicht neue Metadaten nMi.

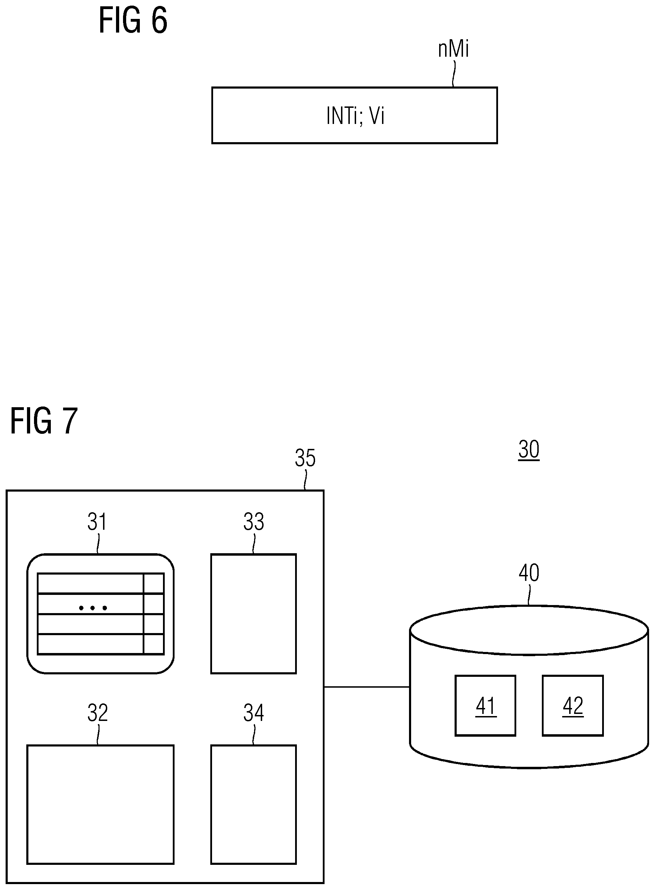

Die neuen Metadaten nMi sind in Figur 6 dargestellt. Die Metadaten nMi enthalten eine Integritätskennung INTi, die bevorzugt eine Prüfsumme ermittelt über den neuen Schichtinhalt nCi und die Schichtkennung Idi ist. Zusätzlich umfassen die Metadaten nMi der neuen Dateisystemschicht nLi eine Versionskennung Vi, die bei jedem Ersetzen der Dateisystemschicht geändert wird und die Version eindeutig kennzeichnet.

Da die erste Dateisystemschicht Li oder Komponenten der ersten Dateisystemschicht in weiteren über der ersten Dateisystemschicht angeordneten Dateisystemschichten enthalten sein können, werden in einem zusätzlichen Verfahrensschritt die weiteren Dateisystemschichten überprüft und entsprechend den beschriebenen Verfahrensschritten ersetzt. Dabei werden alle über der ersten Dateisystemschicht Li liegende Dateisystemschichten Li+1,..,Ln nach einer Abhängigkeit von der ersten Dateisystemschicht Li überprüft und alle von der ersten Dateisystemschicht Li abhängigen zweiten Dateisystemschichten Lj identifiziert. Für jede dieser zweiten Dateisystemschichten Lj wird wiederum jede darüberliegende Dateisystemschicht Lj+1,..,Ln daraufhin geprüft, ob diese Schicht die zweite Dateisystemschicht Lj referenziert bzw. darin geänderte Dateien enthält. Somit wird sukzessive jede Dateisystemschicht Li+1,..,Ln, Lj+1,..,Ln nach einer Abhängigkeit von den darunterliegenden Schichten Li, Lj geprüft. Die jeweils abhängige Dateisystemschicht wird durch eine neue Dateisystemschicht ersetzt.

Optional wird als Grundlage der Ermittlung von Schwachstellen in den Dateisystemschichten ein oder mehrere den Basisschichten zugeordneter Paketmanager genutzt. Dabei muss bedacht werden, dass eine zugeordnete Paketdatenbank bei der Installation neuer Software aktualisiert wird. Diese ist für jeden Paketmanager individuell. Folglich muss für jede erste Dateisystemschicht jeweils die Paketdatenbank überprüft werden. Es wird angenommen, dass zur Abfrage der Paketdatenbank der Schwachstellenscanner direkt auf die Paketdatenbank zugreift und diese nicht mit Hilfe vom Betriebssystem-Kommandos abgefragt wird. Dafür wird wiederrum das Dateisystem mehrfach sequenziell überprüft. Die sequenzielle Überprüfung wird in diesem Fall so durchgeführt, dass alle Dateisystemschichten L1,..,Ln, die eine Paketdatenbank aufweisen, iterativ übereinander und gescannt werden.

Figur 5 zeigt ein Container-Image 24, in dem eine Dateisystemschicht Lj nach Überprüfung der über der ersten Dateisystemschicht Li als von Schicht Li abhängige zweite Schicht identifiziert wurde. Das Container-Image 24 enthält nun eine neue zweite Dateisystemschicht Lj, die eine Schwachstellenfrei neue zweite Dateisystemschicht als Inhalt nCj sowie die ursprüngliche Schichtkennung IDj umfasst. Die der zweiten Schicht nLj zugeordneten neuen Metadaten nMj enthalten eine Integritätskennung und Versionskennung, die für die neue zweite Dateisystemschicht in gleicher Weise gebildet wurden. Die Versionskennung Vi, Vj der ersten und/oder zweiten Dateisystemschicht Li, Lj wird lediglich dann geändert, wenn eine Binärdarstellung der neuen ersten nLi und/oder neuen zweiten Dateisystemschicht nLj von einer Binärdarstellung der ersten Li und/oder zweiten Dateisystemschicht Lj abweicht.

Die Schichtkennung IDi der ersten und/oder zweiten Dateisystemschicht Li, Lj und Information zur Schwachstellenfreien neuen ersten nLi und/oder neuen zweiten Dateisystemschicht nLj für das Container-Image (40, 50) werden an eine Schwachstellendatenbank übermittelt. Dies Daten können von der Schwachstellendatenbank an die Zusammenbauvorrichtung und bereitgestellt werden. Die Zusammenbauvorrichtung kann die Schichtkennung IDi und Information zur Schwachstellenfreien neuen ersten nLi und/oder neuen zweiten Dateisystemschicht nLj für das Container-Image 24 entsprechend einer vorgegebenen Richtline bei der Schwachstellendatenbank anfordern.

Nach dem Ersetzen der ersten Dateisystemschicht Li und/oder zweiten Dateisystemschicht Lj durch die neue erste nLi und/oder neue zweite Dateisystemschicht nLj im Container-Image 24 werden die Schichtkennung Idi, IDj in der Schwachstellendatenbank von der Zusammenbauvorrichtung als erledigt markiert und/oder gelöscht wird.

Figur 7 zeigt ein System zum automatischen Erkennen und Beseitigen von Schwachstellen in einzelnen Dateisystemschichten eines Container-Images und ist derart ausgebildet die bereits beschrienen Verfahrensschritte auszuführen. Das System 30 umfasst einen Schwachstellenscanner 33 und eine Zusammenbauvorrichtung 34, die beispielsweise in einem Gastrechner 35 implementiert sind. Diese können auch in einer Herstellerumgebung als Teil einer Herstellungs- oder Entwicklungsumgebung angeordnet sein. Die Zusammenbauvorrichtung 34 hat Zugriff auf ein Container-Image 31 und optional auf ein Konfigurationsdatei 32. Das System 30 umfasst des Weiteren eine Schwachstellendatenbank 41 und ein Container-Repositorium 42. Diese können als separate Datenbanken oder zusammengefasst in einer Datenbank 40 ausgebildet sein.

Wird vom Schwachstellenscanner 33 in der Dateisystemschicht Li eine Schwachstelle entdeckt und existiert für diese erste Dateisystemschicht Li ein Schwachstellenfreie neue erste Dateisystemschicht nCi, wird diese Information in der Container-Image-spezifischen Schwachstellendatenbank 41 gespeichert und eine Alarmierung ausgelöst. Insbesondere wird ein Alarmsignal an die Zusammenbauvorrichtung 34 übermittelt. Mit Hilfe einer Richtline kann hinterlegt werden, ob die identifizierte Schwachstelle, d.h. die Schichtkennung IDi und Information zu Schwachstellenfreien ersten nLi und/oder zweiten Dateisystemschicht nLj an die Zusammenbauvorrichtung 34 übergeben werden soll und diese die neue erste/zweite Dateisystemschicht nLi, nLj in dem Container-Image 31 ersetzen soll.

Die Zusammenbauvorrichtung 34 kann vom Schwachstellenscanner 33 über die Schwachstellendatenbank 41 informiert werden, in welcher Dateisystemschicht eine Schwachstelle existiert. Hat die Zusammenbauvorrichtung 34 bei einem initialen Zusammenbauvorgang, weiter auch Build-Prozess genannt, die Schichtkennung der Dateisystemschichten spezifiziert hat, weiß das die Zusammenbauvorrichtung 34, welche Dateisystemschichten des Container-Images 31 betroffen sind. Die Zusammenbauvorrichtung 34 kann die neuen ersten/zweiten Dateisystemschichten ersetzen, indem die in der Konfigurationsdatei 32 hinterlegten Direktiven ausgeführt werden.

Das Ersetzen der Dateisystemschicht Li erfolgt beispielsweise dermaßen, dass alle Dateisystemschichten von L1 bis Li eingehängt werden und die in der Konfigurationsdatei spezifizierte Direktive ausgeführt wird. Erfolgt das Ersetzen über einen vom Basis-Image definierten Paketmanager, überprüft die Zusammenbauvorrichtung 34, ob in späteren Schichten Li+1,..,Ln weitere Versionen der Paketdatenbank enthalten sind. Dies ist der Fall, wenn in späteren Schichten Li+1,..,Ln weitere Pakete mittels Paketmanager eingespielt werden. In diesem Fall werden die betroffenen Dateisystemschichten Lj ebenfalls aktualisiert indem die Dateisystemschicht Li+1 mit dem in der Konfigurationsdatei 32 spezifizierten Direktive aktualisiert wir. Anschließend wird die Dateisystemschicht Li+2 mit dem für die Schicht hinterlegten Direktive aktualisiert usw. Hiermit wird vermieden, dass die Paketdatenbank des Paketmanagers inkonsistent wird. Dazwischenliegende Dateisystemschichten, die keine Paketdatenbank aufweisen, müssen nicht betrachtet werden.

Ist das Ersetzen abgeschlossen, bleibt die Schichtkennung IDi, IDj der Dateisystemschicht nLi, nLj im Gegensatz zu jetzt gleich. Die Schichtkennung IDi der Dateisystemschicht Li wird durch beispielsweise eine Hashfunktion über die mitgelieferten Binärdaten der Dateisystemschicht Li abgeleitet. Um den gleichen Schutz für die neue Dateisystemschicht nLi bereitzustellen wird bei gleichbleibender Schichtkennung IDi und aktualisierten Binärdaten der neuen Dateisystemschicht nLi ein entsprechender Hashwert als Integritätskennung INTi in den Metadaten der Dateisystemschicht hinterlegt. Des Weiteren werden die einzelnen Dateisystemschichten nLi versioniert und diese Versionkennung Vi ebenfalls in den Metadaten hinterlegt. Somit kann eine Laufzeitumgebung des Gastrechners 35 erkennen, ob es zur aktuell auf dieser betriebenen Dateisystemschicht eine aktualisierte Variante gibt. Identifizierte und ersetzte und damit geschlossene Schwachstellen werden von der Zusammenbauvorrichtung 34 in der Schwachstellendatenbank 41 als erledigt markiert oder gelöscht.

Um einem Entwickler die Möglichkeit zu geben, einzelne Dateisystemschichten bei der Veränderung von tieferliegenden Dateisystemschichten immer neu zu generieren, können die zur Dateisystemschichten zugehörigen Direktiven innerhalb der Konfigurationsdatei entsprechend markiert werden. Hierbei sind zwei Varianten möglich:
- Entweder wird die Direktive immer aufgerufen, sobald sich eine darunterliegende Schicht ändert
- Alternativ wird die Direktive nur aufgerufen und eine Aktualisierung der Dateisystemschicht durchgeführt, sobald sich eine referenzierte Dateisystemschicht ändert. Die Steuerung kann beispielsweise mit Hilfe spezifischer Kommentare in der Konfigurationsdatei 32 oder in einer zugeordneten eigenen Datei hinterlegt werden.

Sind die einzelnen Dateisystemschichten aktualisiert, werden diese im Container-Repositorium 42 abgelegt und veröffentlicht. Eine Laufzeitumgebungen im Gastrechner 35 oder Zusammenbau-Systeme, die das aktualisierte Container-Image 31 als Basis-Image verwenden, können in festgelegten zeitlichen Abständen, beispielsweise täglich, über das Container-Repositorium 42 überprüfen, ob für ein Container-Image 31 aktualisierte Dateisystemschichten existieren. Über eine Richtline ist optional auf der Zusammenbauvorrichtung 34 bzw. Laufzeitumgebung des Gastrechners hinterlegt, ob diese die jeweiligen aktualisierten Dateisystemschichten vom im Container-Repositorium 42 herunterladen möchten und selbst einen Build-Prozess aufgrund des geänderten Basis-Images durchführen bzw zu einer definierten Uhrzeit auf einer Laufzeitumgebung die für eine Container-Instanz geänderten Schichten nLi, nLj beziehen und die Container-Instanz neu starten. Kann eine aktualisierte Container-Instanz wider Erwarten nicht gestartet werden, kann auf der Laufzeitumgebung die Container-Instanz entweder gestoppt bleiben oder es wird ein Fallback auf die ursprünglichen Dateisystemschichten Li, Lj durchgeführt. Das Verhalten wird auf der Laufzeitumgebung oder in einer zugehörigen Orchestrierungskomponente definiert.

Durch das beschriebene Verfahren und System können Sicherheitslücken bei Containern in den jeweiligen Schichten behoben werden. Es ist nicht erforderlich, ein komplettes Container-Image neu zu bauen und zu versionieren. Build-Prozesse innerhalb eines Containers können hierdurch deutlich beschleunigt werden. Eine Zusammenbauvorrichtung oder eine Laufzeitumgebung können selbständig erkennen, ob für ein Container-Image Securityfixes, also Schwachstellenfreie Dateisystemschichten, existieren und deren Einspielen aktiv anfordern. Durch Build-Richtline in der Konfigurationsdatei kann gesteuert werden, ob einzelne Tasks innerhalb der Konfigurationsdate ausgeführt werden sollen, sofern sich die darunterliegende Schicht ändert. Es muss kein komplettes Container-Image, sondern lediglich die relevanten Schichten zur Beseitigung von Sicherheitslücken erstellt werden, wodurch Bandbreite eingespart wird.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum automatischen Erkennen und Beseitigen von Schwachstellen in einzelnen Dateisystemschichten eines Container-Images (20), in dem jede Dateisystemschicht (L1,..., Ln) eine eindeutige Schichtkennung (ID1,..., IDn)) enthält, mit den Schritten:
a) Überprüfen (S1) der Dateisystemschichten (L1,..Ln) des Container-Images (20) auf Schwachstellen,
b) Identifizieren (S2) von mindestens einer Schwachstelle in einer ersten Dateisystemschicht (Li) des Container-Images,
c) für jede erste Dateisystemschicht (Li), Übermitteln (S3) der Schichtkennung (IDi) und einer Schwachstellenfreien neuen ersten Dateisystemschicht (nLi) an eine Zusammenbauvorrichtung (34),
d) Eintragen (S4) der Schichtkennung (IDi) der ersten Dateisystemschicht (Li) unverändert in die neue erste Dateisystemschicht (nLi),
e) Zuordnen (S5) einer Integritätskennung (INTi), die abhängig von der neuen ersten Dateisystemschicht (nLi) und der Schichtkennung (IDi) erzeugt wird, als Metadatum zur neuen ersten Dateisystemschicht (nLi),
und
f) Ersetzen (S6) lediglich der durch die Schichtkennung (IDi) gekennzeichneten ersten Dateisystemschicht (Li) durch die neue erste Dateisystemschicht (nLi) im Container-Image durch die Zusammenbauvorrichtung (34).

2. Verfahren nach Anspruch 1, mit dem zusätzlichen Schritt:
- Identifizieren von mindestens einer zweiten Dateisystemschicht (Lj) des Container-Images (50), die mindestens eine Komponente der ersten Dateisystemschicht (Li) enthält, und Durchführen der Schritte c) bis f) für jede zweite Dateisystemschicht (Lj).

3. Verfahren nach Anspruch 2, wobei eine Versionskennung der ersten Dateisystemschicht (Li) und/oder eine Versionskennung (Vi) der zweiten Dateisystemschicht (Lj) bei jedem Ersetzen der ersten Dateisystemschicht (Li) und/oder zweiten Dateisystemschicht (Lj) geändert wird und die geänderte Versionskennung in den Metadaten (nMi, nMj) angeordnet wird.

4. Verfahren nach Anspruch 2, wobei die Versionskennung der ersten und/oder zweiten Dateisystemschicht (Li, Lj) lediglich dann geändert wird, wenn eine Binärdarstellung der neuen ersten und/oder neuen zweiten Dateisystemschicht (nLi, nLj) von einer Binärdarstellung der ersten und/oder zweiten Dateisystemschicht (Li, Lj) abweicht.

5. Verfahren nach einem der vorangehenden Ansprüche, wobei die Schichtkennung (IDi) der ersten und/oder zweiten Dateisystemschicht (Li, Lj) und Information zur Schwachstellenfreien neuen ersten und/oder neuen zweiten Dateisystemschicht (nLi, nLj) für das Container-Image (22, 24) an eine Schwachstellendatenbank (41) übermittelt werden und von der Schwachstellendatenbank (41) der Zusammenbauvorrichtung (34) bereitgestellt werden.

6. Verfahren nach Anspruch 5, wobei die Zusammenbauvorrichtung (34) die Schichtkennung (IDi) und Information zur Schwachstellenfreien neuen ersten und/oder neuen zweiten Dateisystemschicht (nLi, nLj) für das Container-Image (22, 24) entsprechend einer vorgegebenen Richtline bei der Schwachstellendatenbank (41) anfordert.

7. Verfahren nach einem der Ansprüche 5 oder 6, wobei nach dem Ersetzen der ersten Dateisystemschicht (Li) und/oder zweiten Dateisystemschicht (Lj) im Container-Image (22, 24) die Schichtkennung (IDi, IDj) in der Schwachstellendatenbank (41) von der Zusammenbauvorrichtung (34) als erledigt markiert und/oder gelöscht wird.

8. Verfahren nach einem der der vorangehenden Ansprüche, wobei beim Identifizieren einer Schwachstelle in einer ersten Dateisystemschicht (Li) ein Alarmsignal an die Zusammenbauvorrichtung (34) übermittelt wird.

9. Verfahren nach Anspruch 2, wobei alle Direktiven in einer Konfigurationsdatei des Container-Images die auf die ersten Dateisystemschicht (Li) ausgeführt werden, markiert sind und die mindestens eine zweite Dateisystemschicht (Lj) anhand der Markierung identifiziert wird.

10. Verfahren nach Anspruch 9, wobei die Schritte c) bis f) für alle zweiten Dateisystemschichten (Lj) durchgeführt werden, wenn sich die erste Dateisystemschicht (Li) ändert.

11. Verfahren nach Anspruch 9, wobei die Schritte c) bis f) nur dann durchgeführt werden, wenn sich die von der ersten Dateisystemschicht (Li) abhängige zweite Dateisystemschicht (Lj) ändert.

12. Verfahren nach einem der vorangehenden Ansprüche, wobei die mindestens eine neue erste Dateisystemschicht (nLi) und/oder neue zweite Dateisystemschicht (nLj) in einem Container-Repositorium (42) abgespeichert und veröffentlicht wird.

13. Verfahren nach Anspruch 12, wobei die mindestens eine neue erste Dateisystemschicht (nLi) und/oder neue zweite Dateisystemschicht (nLj) auf dem Container-Repositorium von einer Laufzeitumgebung eines Gastrechners oder eine beliebige Zusammenbauvorrichtung abhängig von einer Aktualisierungsrichtlinie abgefragt werden und in einem Container-Image auf dem Gastrechner ersetzt werden.

14. System zum automatischen Erkennen und Beseitigen von Schwachstellen in einzelnen Dateisystemschichten eines Container-Images (20), in dem jede Dateisystemschicht (L1,..., Ln) eine eindeutige Schichtkennung (ID1,..., IDn)) enthält, umfassend:
eine Schwachstellenscanner (33), die derart ausgebildet ist,
a) die Dateisystemschichten des Container-Images auf Schwachstellen zu überprüfen,
b) mindestens eine Schwachstelle in einer ersten Dateisystemschicht (Li) des Container-Images zu identifizieren,
c) für jede erste Dateisystemschicht (Li), die Schichtkennung (IDi) und eine Schwachstellenfreie neue erste Dateisystemschicht (nLi) an eine Zusammenbauvorrichtung (34) zu übermitteln, und
die Zusammenbauvorrichtung (34) derart ausgebildet ist,
d) die Schichtkennung (IDi) der ersten Dateisystemschicht (Li) unverändert in die neue erste Dateisystemschicht (nLi) einzutragen,
e) eine Aktualisierungskennung (aIDi), die abhängig von der neuen ersten Dateisystemschicht (nLi) und der Schichtkennung (IDi) erzeugt wird, als Metadatum zur neuen ersten Dateisystemschicht (nLi) zuzuordnen, und
f) lediglich die durch die Schichtkennung (IDi) gekennzeichneten ersten Dateisystemschicht (Li) durch die neue erste Dateisystemschicht (nLi) in der Zusammenbauvorrichtung (34) zu ersetzen.

15. System nach Anspruch 14, wobei die Zusammenbauvorrichtung (34) innerhalb einer Zusammenbauanordnung oder in einem Gastrechner (35), auf dem das Container-Image ausgeführt wird, ausgebildet ist.

16. Computerprogrammprodukt, umfassend ein nicht flüchtiges Computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 13 durchzuführen.
